Europäisches Patentamt

(19) European Patent Office

Office européen des brevets

(11) Publication number: **0 113 955**
**B1**

# (12) EUROPEAN PATENT SPECIFICATION

(45) Date of publication of the patent specification:
21.05.86

(21) Application number: **83306621.0**

(22) Date of filing: **31.10.83**

(30) Priority: **05.11.82 GB 8231629**

(43) Date of publication of application:
**25.07.84 Bulletin 84/30**

(45) Publication of the grant of the patent:
**21.05.86 Bulletin 86/21**

(84) Designated Contracting States:
**AT DE FR GB IT NL SE**

(56) References cited:
**EP - A - 0 052 889**
**US - A - 4 076 670**
**US - A - 4 120 916**
**US - A - 4 332 655**

(51) Int. Cl.⁴: **C 09 D 3/733, C 08 L 23/04,
C 08 J 7/04**

(73) Proprietor: **Exxon Research and Engineering Company,
P.O. Box 390 180 Park Avenue, Florham Park New
Jersey 07932 (US)**

(72) Inventor: **Gregory, Bertram Hubert, 19 Fritz van den
Berghelaan, Aartselaar 2630 (BE)**

(74) Representative: **Northover, Robert Frank et al, ESSO
Chemical Limited Esso Chemical Research Centre P.O.
Box 1, Abingdon Oxfordshire, OX13 6BB (GB)**

(54) Extrusion coating.

LIBER, STOCKHOLM 1986

## Description

This invention concerns a method of extrusion coating in particular for polypropylene or metal substrates. It relates to the use in such coating of polyolefin blends comprising a homo- or copolymer of ethylene, a homo- or copolymer of polypropylene and an elastomer.

Polyolefins, and particularly low density polyethylenes (LDPE), are widely used to coat substrates. This coating may be effected by extrusion coating, and LDPE has been used to coat a variety of substrates including paper, aluminium foil and some plastics films. In many industrial and consumer applications it is desirable to form a flexible thermoplastic coating on polypropylene (PP) substrates such as woven or "non-woven fabrics, scrims and extruded films. This may, for example, be desirable to provide a water-proofing layer on an otherwise porous fabric or a heat sealable layer on a film or sheet. However, LDPE will not adhere to polypropylene, and thus PP substrates have proved extremely difficult to coat. Aluminium foil has also proved a difficult substrate to coat with good adhesion.

It has now been found that certain polyolefin-polypropyleneelastomer blends are very effective in extrusion coating particularly of PP and aluminium substrates. Various polyolefin blends have been described in relation to the formation of films such as in US 4087485 which discloses a blend comprising 2 to 22 wt.% of an ethylenepropylene copolymer elastomer, 1 to 15 wt.% LDPE and 70 to 95 wt.% polypropylene for forming moulded or extruded articles or protective coatings. GB 2007685A discloses compositions comprising a blend of a) low density polyethylene or certain ethylene copolymers, b) an ethylene-α-olefin copolymer elastomer with a density of not more than 0.91 g/cm³, and c) crystalline polypropylene, high density polyethylene or crystalline polybutene-1, such composition being disclosed for use in cold drawn film. These documents do not suggest the use of the blends in extrusion coating.

J56-040549 discloses a composition comprising a) 100 parts by eight polypropylene, b) 3-20 parts by weight low density polyethylene, c) 2-10 parts by weight of ethylene-β-olefin copolymer elastomer and d) 0.03-0.25 parts by weight of a heat stabiliser. This composition is laminated onto a variety of substrates including polypropylene film or cloth. We have found that extrusion coating may be carried out using blends with a lower polypropydene content.

In one aspect this invention provides the use of a thermoplastic composition for extrusion coating, which composition comprises

a) from 40 to 70 wt.% of an ethylene copolymer;

b) from 10 to 50 wt.% of a propylene homopolymer and/or copolymer; and

c) from 10 to 50 wt.% of an olefinic elastomer.

Component a) is an ethylene polymer and suitable copolymrs include copolymers of ethylene and alphaolefins having 3 to 16 carbon atoms, such as propylene or 1-butene. Also included are copolymers of ethylene with an unsaturated ester of a lower carboxylic acid.or with an unsaturated carboxylic acid. In particular, copolymers of ethylene with vinyl acetate (EVA), with acrylic acid (EAA) or methacrylic acid, or with alkyl acrylates such as methyl acrylate and ethyl acrylate, may be employed. For the purposes of this invention, it is also possible to use mixtures of polyethylene and ethylene copolymers. The polyethylene copolymers to be employed generally contain from 50 to 99 weight percent ethylene, preferably from 60 to 95 weight percent ethylene, most preferably from 70 to 95 weight percent ethylene.

EVA or an EAA is preferred for component a). An EVA containing from 5 to 30 wt.% vinyl acetate or an EAA containing from 5 to 30% acrylic acid is particularly preferred.

A preferred melt index for component a) is from 1 to 20, more preferably from 2 to 10.

The level of polyethylene or ethylene copolymer employed in the composition of the invention is generally from 50 to 70 weight percent of the composition, and preferably from 60 to 70 weight percent.

The polypropylene component b) of the compositions of the invention may be a polypropylene homopolymer such as a highly crystalline isotactic or syndiotactic polypropylene. The propylene component may be a copolymer, referred to as a polypropylene reactor copolymer, either random or block copolymer, containing minor amounts of an alpha-olefin comonomer of 2 to 16 carbon atoms. The level of comonomer which can be utilized will generally be from 1 to 20 wt. %, preferably from 2 to 18 wt.%, and most preferably from 2 to 15 wt.%. A preferred comonomer is ethylene. The density of polypropylene can be from 0.800 to 0.900 g/cc.

The propylene component b) preferably comprises from 10 to 40 wt.% of the composition, more preferably from 15 to 30 wt.% of the composition.

The olefinic elastomer component of the composition of the invention may comprise an ethylene copolymer elastomer, such as a copolymer of ethylene with a higher alpha-olefins such as propylene. Preferred ethylene elastomer copolymers for use herein comprise from 30 to 90 weight percent ethylene, more preferably from 35 to 80 weight percent ethylene, and most preferably from 50 to 70 weight percent ethylene. In some cases an oil extended elastomer can be employed in the compositions of this invention.

It is also within the scope of this invention to employ as the olefinic elastomer an ethylene copolymer elastomer comprising a terpolymer of ethylene, a higher alpha-olefin such as propylene, and a nonconjuqated diene (the terpolymer commonly referred to as EPDM). In such elastomers the nonconjugated diolefin may be straight chain, branched chain or cyclic hydrocarbon diolefins having from 6 to 15 carbon atoms, such as the following:

A. straight chain acylic dienes, such as 1, 4-hexadiene or 1, 6-octadiene;

B. branched chain acyclic dienes, such as 5-methyl-1 4-hexadiene, 3,7-dimethyl-1,6-octadiene or 3,7 diemthyl-1, 7 octadiene, or a mixed isomer of dihydro-myrcene and dihydro-ocimene;

C. single ring alicyclic dienes, such as 1,3-cyclopentadiene, 1,4-cyclohexadiene, 1,5-cyclooctadiene or 1,5-cyclododecadiene;

D. multi-ring alicyclic fused or bridged ring dienes, such as tetrahydroindene, methyltetrahydroindene, dicyclopentadiene, bicylo-(2,2,1)- hepta-2,5-diene or an alkenyl, alkylidene, cyclo-alkenyl or cycloalkylidene norbornene such as 5-methylene-2-norbornene (MNB), 5-ethylidene-2-norbornene (ENB), 5-propenyl-2-norbornene, 5-isopropylidene-2-norbornene, 5-(4-cyclopentenyl)-2-norbornene, 5-cyclohexylidene-2-norbornene, 5-vinyl-norbornene or norbornadiene.

Of the non-conjugated dienes typically used to prepare these copolymers, preferred are dicyclopentadiene, 1,4-hexadiene, 5-methylene-2-norbornene and 5-ethylidene-2-norbornene; 5-ethylidene-2-norbornene (ENB) and 1,4-hexadiene are particularly preferred diolefins. EPDM elastomers and their method of manufacture are now well known to those skilled in the art. Oil extended EPDM elastomers may also be usedi Preferred EPDM elastomers contain from 30 to 90 weight percent ethylene and most preferably from 50 to 70 weight percent ethylene, and from 0.5 to 15 weight percent of the nonconjugated diolefin.

The olefinic elastomer useful in this invention can also be a polyisobutylene, a copolymer of isobutylene and isoprene (generally known as butyl rubber) or a halogenated copolymers of isobutylene and isoprene (generally known as halogenated butyl rubber, such as chlorinated, brominated and chlorobrominated butyl rubber). Butyl rubber is a vulcanizable rubber copolymer containing from 85 to 99.5 percent combined isoolefin having from 4 to 8 carbon atoms and from 0.5 to 15 percent combined conjugated diolefin having from 4 to 8 carbon atoms. Such copolymers and their preparation are well known, and generally the isoolefin is a compound such as isobutylene and the diolefin is a compound such as butadiene or isoprene. Halogenated butyl rubbers are also well known; chlorinated and brominated butyl rubber generally contain at least 0.5 weight percent combined halogen and up to 1 atom of halogen per double bond in the copolymer; chlorobrominated butyl rubber generally contains from 1.0 to 3.0 weight percent bromine and from 0.05 to 0.5 weight percent chlorine.

The level of olefinic elastomer employed in the final blend composition is generally from 10 to 40 wt.% of the composition, and preferably from 10 to 20 wt.% of the composition.

In addition to the essential ingredients of the composition of the invention, various optional ingredients can by incorporated into the composition in order to achieve various cost and/or performance objectives in specific end-use applications. For example, one can use such materials as process aids (e.g., stearic acid), lubricants (e.g., oleamide), antiblocking aids, antioxidants, foaming agents and fillers and pigments. The latter two classes of materials can be used at levels up to about 40 weight percent based on the weight of the total composition.

Preparation of compositions of this invention can be achieved in several different ways. The various components may be brought into intimate contact by, for example, dry blending these materials and then passing the overall composition through a compounding extruder. Alternatively, the components may be fed directly to a mixing device such as a compounding extruder, high shear continuous mixer, two roll mill or an internal mixer such as a Banbury mixer. The optional ingredients previously described can be added to the composition during this mixing operation. It is also possible to achieve melt mixing in an extruder section of an extrusion coating apparatus. Overall, the objective is to obtain a uniform dispersion of all ingredients and this is readily achieved by inducing sufficient shear and heat to cause the plastics component(s) to melt. However, time and temperature of mixing should be controlled as is normally done by one skilled in the art so as to avoid molecular weight degredation.

The invention also extends to a method of extrusion coating in which method there is extruded onto a substrate to be coated a thermoplastic composition as defined hereinbefore.

As used herein the term ""extrusion coating" is used to mean coating processes in which a molten thermoplastic composition as defined hereinbefore is extruded onto a substrate to form a coating; laminating processes in which a molten thermoplastic composition as defined hereinbefore is extruded between two substrates to form a tie layer bonding the two substrates into a three component laminate; and coextrusion process in which a molten thermoplastic composition as defined hereinbefore is coextruded with a second thermoplastic composition onto a substrate to form a two component coating on the substrate.

It has been found that the EVA-based compositions for use in the invention are particularly effective in coating polypropylene, and surprisingly may be used to coat polypropylene substrates directly by extrusion coating without the need for pretreatment of the substrate. It has further been surprisingly found that the EAA-compositions for use in the invention are particularly effective incoating metal foil such as aluminium foil. The method of the invention provides a means of forming coatings with good adhesion to the substrates and with good heat sealability, which are capable of providing a tough, flexible and impermeable

coating on the substrate.

The extrusion coating according to the method of the invention may be carried out on conventional extrusion coating equipment, such as is well known in the art. It has been found that at typical commercial coating line speeds, for example of up to 200 m/min, the compositions of the invention may be readily extruded onto substrates with even coating weight. There is reduced tendency to melt surging and edge instabilities in the coating process which may lead to uneven coatings.

The following Example is now given, though only by way of illustration, to show certain aspects of the invention in more detail.

**Example 1**

The following components were blended to form a composition which has a melt index of 8.0 g/10 min. at 190°C.

| Components | % |
|---|---|
| Escorene Ultra UL00909®<br>(EVA, melt index 9, 9% VA) | 65 |
| Vistalon 1721® (EPDM elastomer) | 15 |
| Profax Pd 970® (PP homopolymer) | 20 |

Antioxidants such as Irganox 1076® may be added to improve heat stability.

The composition was then used to coat a polypropylene substrate using an extrusion coating line commonly used with LDPE. Extruded at a melt temperature of 270°C, the composition was applied on the substrate in a coating weight range of 20 20-80 g/m² at a line speed of 200 m/min. The neck-in at the die did not exceed 50 mm per edge.

On PP film as substrate, the peel adhesion of the coated blend was 300 g/15 mm wide specimen at a coating weight of 40 g/cm². This level of adhesion was achieved without the use of bonding adhesives or chemical primers between the PP film and coating.

The said coating was flexible, clear and readily heat sealed over a temperature range of from 160 to 180°C on a conventional sealing machine.

**Example 2**

The following components were blended to form a composition for coating propylene:

| | % |
|---|---|
| Escorene Ultra UL00909® | 55 |
| Vistalon 1721® | 15 |
| Profax Pd 970® | 30 |

This composition was found to give higher PP adhesion than Example 1, but it was necessary to reduce the line speed of the extrusion coater to below l50m/min.

**Example 3**

The following components were blended to form a composition for coating aluminium foil:

| | % |
|---|---|
| Ethylene acrylic acid copolymer<br>(8% acrylic acid; 5 melt index) | 64.9 |
| Vistalon 1721® | 15 |
| Profox Pd 970® | 20 |
| Irganox 1010® (a commercially<br>available anti-oxidant) | 0.1 |

This composition was found to give high adhesion on a variety of substrates, but particularly on aluminium foil. Using aluminium foil as a substrate, the peel adhesion of a coating of the above composition was 300g/l5mm wide specimen at a coating weight of 3Og/cm²'

EAA-based composition of this type may be especially useful:

a) in extrusion coating onto aluminium foil,

b) in extrusion lamination, e.g. to bond a polypropylene film to an aluminium foil; and

c) in coextrusion with a polypropylene extrudable composition e.g. to form a composite comprising an aluminium foil coated with the EAA-based composition which is in turn coated with polypropylene.

**Claims**

1. The use of a thermoplastic composiotion for extrusion coating which composition comprises:

a) from 40 to 70 wt.% of an ethylene copolymer;

b) from 10 to 50 wt.% of a propylene homopolymer and/or copolymer; and

c) from 10 to 50 wt.% of an olefinic elastomer.

2. The use as claimed in claim 1, in which the composition comprises:
a) from 40 to 70 wt.% of an EVA copolymer and/or an EAA copolymer;
b) from 10 to 50 wt.% of a polypropylene homopolymer; and
c) from 10 to 50 wt.% of an EPDM elastomer.

3. The use as claimed in claim 1 or claim 2, in which the ethylene copolymer has a melt index of from 2 to 10.

4. A method of extrusion coating, which comprises extruding onto a substrate to be coated a composition which comprises:
a) from 40 to 70 wt.% of an ethylene copolymer;
b) from 10 to 50 wt.% of a propylene homopolymer and/or copolymer; and
c) from 10 to 50 wt.% of an olefinic elastomer.

5. A method as claimed in claim 4 in which the ethylene copolymer has a melt index of from 2 to 10.

6. A method as claimed in claim 4 or claim 5, in which the composition comprises:
a) from 40 to 70 wt.% of an EVA copolymer;
b) from 10 to 50 wt.% of a polypropylene homopolymer; and
c) from 10 to 50 wt.% of an EPDM elastomer.

7. A method as claimed in claim 6, in which the composition comprises:
a) from 60 to 70 wt.% of EVA;
b) from 15 to 30 wt.% of polypropylene homopolymer; and
c) from 10 to 20 wt.% of EPDM elastomer.

8. A method as claimed in claim 7, in which the substrate is polypropylene.

9. A method as claimed in claim 4 or claim 5, in which the composition comprises:
a) from 60-70 wt% of EAA;
b) from 15-30 wt% of polypropylene homopolymer; and
c) from 10 to 20 wt% of EPDM elastomer.

10. A method as claimed in claim 9, in which the substrate is aluminium foil.

11. A method as claimed in claim 9, in which the composition is used to bond a polypropylene layer to an aluminium foil substrate.

**Patentansprüche**

1. Verwendung einer thermoplastischen Zusammensetzung zur Extrusionsbeschichtung, wobei die Zusammensetzung gekennzeichnet ist durch:
a) 40 bis 70 Gew.% eines Ethylencopolymeren,
b) 10 bis 50 Gew.% eines Propylenhomopolymeren und/oder -copolymeren und
c) 10 bis 50 Gew.% eines olefinischen Elastomeren.

2. Verwendung nach Anspruch 1, wobei die Zusammensetzung gekennzeichnet ist durch:

a) 40 bis 70 Gew.% eines EVA-Copolymeren und/oder eines EAA-Copolymeren,
b) 10 is 50 Gew.% eines Polypropylenhomopolymeren und
c) 10 bis 50 % eines EPDM-Elastomeren.

3. Verwendung nach Anspruch 1 oder 2, dadurch gekennzeichnet, daß das Ethylencopolymer einen Schmelzindex von 2 bis 10 besitzt.

4. Verfahren zur Extrusionsbeschichtung, das dadurch gekennzeichnet ist, daß auf ein zu beschichtendes Substrat eine Zusammensetzung extrudiert wird, die gekennzeichnet ist durch:
a) 40 bis 70 Gew.% eines Ethylencopolymeren,
b) 10 bis 50 Gew.% eines Propylenhomopolymeren und/oder -copolymeren und
c) 10 bis 50 Gew.% eines olefinischen Elastomeren.

5. Verfahren nach Anspruch 4, dadurch gekennzeichnet, daß das Ethylencopolymer einen Schmelzindex von 2 bis 10 besitzt.

6. Verfahren nach Anspruch 4 oder 5, dadurch gekennzeichnet, daß die Zusammensetzung gekennzeichnet ist durch
a) 40 bis 70 Gew.% eines EVA-Copolymeren,
b) 10 bis 50 Gew.% eines Polypropylenhomopolymeren und
c) 10 bis 50 Gew.% eines EPDM-Elastomeren.

7. Verfahren nach Anspruch 6, dadurch gekennzeichnet, daß die Zusammensetzung gekennzeichnet ist durch
a) 60 bis 70 Gew.% EVA,
b) 15 bis 30 Gew.% Polypropylenhomopolymer und
c) 10 bis 20 Gew.% EPDM-Elastomer.

8. Verfahren nach Anspruch 7, dadurch gekennzeichnet, daß das Substrat Polypropylen ist.

9. Verfahren nach Anspruch 4 oder 5, dadurch gekennzeichnet, daß die Zusammensetzung gekennzeichnet ist durch:
a) 60 bis 70 Gew.% EAA,
b) 15 bis 30 Gew.% Polypropylenhomopolymer und
c) 10 bis 20 Gew.% EPDM-Elastomer.

10. Verfahren nach Anspruch 9, dadurch gekennzeichnet, daß das Substrat Aluminiumfolie ist.

11. Verfahren nach Anspruch 9, dadurch gekennzeichnet, daß die Zusammensetzung verwendet wird, um eine Polypropylenschicht an ein Aluminiumfoliensubstrat zu binden.

**Revendications**

1. Utilisation d'une composition thermoplastique pour le revêtement par extrusion, la composition comprenant :
a) 40 à 70 % en poids d'un copolymère d'éthylene;
b) 10 à 50 % en poids d'un homopolymère et/ou d'un copolymère de propylène; et

c) 10 à 50 % en poids d'un élastomère oléfinique.

2. Utilisation suivant la revendication 1, dans laquelle la composition comprend:

a) 40 à 70 % en poids d'un copolymère d'EVA et/ou d'un copolymère d'EAA;

b) 10 à 50 % en poids d'un homopolymère polypropylénique; et

c) 10 à 50 % en poids d'un élastomère EPDM.

3. Utilisation suivant la revendication ou la revendication 2, dans laquelle le copolymère d'éthylène a un indice de fluidité de 2 à 10.

4. Procédé de revêtement par extrusion, qui comprend l'extrusion sur un substrat à revêtir d'une composition contenant:

a) 40 à 70 % en poids d'un copolymère d'éthylène;

b) 10 à 50 % en poids d'un homopolymère et/ou d'un copolymère de propylène; et

c) 10 à 50 % en poids d'un élastomère oléfinique.

5. Procédé suivant la revendication 4, dans lequel le copolymère d'éthylène a un indice de fluidité de 2 à 10.

6. Procédé suivant la revendication 4 ou la revendication 5, dans lequel la composition comprend:

a) 40 à 70 % en poids d'un copolymère EVA;

b) 10 à 50 % en poids d'un homopolymère polypropylénique; et

c) 10 à 50 % en poids d'un élastomère EPDM.

7. Procédé suivant la revendication 6, dans lequel la composition comprend :

a) 60 à 70 % en poids d'EVA;

b) 15 à 30 % en poids d'homopolymère polypropylénique; et

c) 10 à 20 % en poids d'élastomère EPDM.

8. Procédé suivant la revendication 7, dans lequel le substrat est en polypropylène.

9. Procédé suivant la revendication 4 ou la revendication 5, dans lequel la composition comprend:

a) 60 à 70 % en poids d'EAA;

b) 15 à 30 % en poids d'homopolymère polypropylénique; et

c) 10 à 20 % en poids d'élastomère EPDM.

10. Procédé suivant la revendication 9, dans lequel le substrat est une feuille d'aluminium.

11. Procédé suivant la revendication 9, dans lequel la composition est utilisée pour lier une couche de polypropylène à un substrat formé d'une feuille d'aluminium.